# EUROPÄISCHE PATENTSCHRIFT

(11) **EP 3 461 864 B1**
(45) Veröffentlichungstag und Bekanntmachung des Hinweises auf die Patenterteilung: **29.10.2025**
(21) Anmeldenummer: 18193954.7
(22) Anmeldetag: 12.09.2018
(51) Int. Cl.: C09D 5/16, C09D 183/04

(54) **HÄRTBARE ZUSAMMENSETZUNG AUF BASIS VON POLYSILOXANEN**
CURABLE COMPOSITION BASED ON POLYSILOXANES
COMPOSITION DURCISSABLE À BASE DE POLYSILOXANES

(30) Priorität: 28.09.2017 EP 17193627
(43) Veröffentlichungstag der Anmeldung: 03.04.2019
(73) Patentinhaber: Evonik Operations GmbH, 45128 Essen (DE)
(72) Erfinder: Fiedel, Michael, 45239 Essen (DE); Marochow, Thorsten, 45355 Essen (DE); Engel, Doreen, 86381 Krumbach (DE); Schubert, Frank, 47506 Neukirchen-Vluyn (DE); Lewin, Anke, 40215 Düsseldorf (DE)
(74) Vertreter: Evonik Patent Association

(56) Entgegenhaltungen:
- EP-A2- 1 946 740
- DE-A1- 102015 202 278
- US-A1- 2007 129 528

## Beschreibung

Die Erfindung betrifft eine härtbare Zusammensetzung auf Basis von Polysiloxanen, deren Herstellungsverfahren sowie deren Verwendung.

In einer Vielzahl von Anwendungsfeldern werden Oberflächenbeschichtungen gesucht, die eine Anhaftung von Schmutz verschiedenster Art verhindern oder zumindest reduzieren.

Besonders auf permanenter Bewässerung ausgesetzten Strukturen, wie z. B. bei Schiffsrümpfen, Bojen, Fischnetzen, Zug- und Abflussrohren zum Kühlen, off-shore-Bohranlagen oder Wassertanks, die dem Meerwasser und/oder Süßwasser ausgesetzt sind, verursacht das Anhaften und das Wachstum von Organismen (Bio-fouling) beträchtliche ökonomische Verluste. Diese resultieren im Falle von Schiffen z.B. aus der erhöhten Reibung und damit einhergehend des erhöhten Treibstoffverbrauchs. Auch erleiden Oberflächen durch den erhöhten Widerstand gegenüber Wellen oder Strömungen bei statischen Strukturen mechanischen Schaden, was zu kürzeren Wartungszyklen führt und somit auch zur verringerten Betriebszeit.

Auch bei Fassadenfarben werden Beschichtungen gesucht, die einen Bewuchs mit Mikroorganismen/Algen verhindern oder verzögern.

Aus dem Stand der Technik sind Oberflächenbeschichtungen bekannt, deren Oberfläche selbstpolierende Eigenschaften aufweist. Die selbstpolierende Eigenschaft lässt sich u.a. durch den Einsatz von degradierbaren Polymerbeschichtungen erreichen, welche durch ihr kontinuierliches Abbauverhalten die Oberfläche stets erneuern. Eine derartige Polymereigenschaft kann dazu führen, dass Anschmutzungen verschiedenster Art mitabgelöst werden und so die Oberfläche schmutzfrei bleibt. Effekte dieser Art können in Anti-Graffiti, Anti-Icing, Easy-to-clean und anti-dirt-pickup Beschichtungen, aber auch zur Prävention von Biofouling, genutzt werden.

Polymere, die bei Wasserkontakt degradieren, sind im Bereich der Antifoulingcoatings bekannt. Hauptsächlich werden Acrylatester / silylierte Acrylate verwendet. Eine besondere Stoffklasse sind die Poly(ester). Hierbei wird die Degradationseigenschaft durch Wahl der Monomere, durch die Polymerachitektur und durch die Molmasse bestimmt.

Aus dem Stand der Technik sind anwuchsverhindernde Farbzusammensetzungen bekannt, in welchen das Polymer des Bindemittelsystems ein Trialkylzinnderivat eines Polymers mit Carbonsäuregruppen in den Monomersegmenten ist. Sie bilden einen Beschichtungsfilm, der sich in Seewasser langsam auflöst und somit das Anhaften des Biobewuchses durch die Sezernierung der Organozinnverbindung verhindert. Jedoch ist deren Anwendung aufgrund von Problemen der Seeverschmutzung, vor dem Hintergrund stark neurotoxischer Eigenschaften von Organozinnverbindungen, in den letzten Jahren rechtlichen Beschränkungen unterworfen.

DE102015202278 A1 offenbart wässrige Dispersionen von Organosiliciumverbindungen enthaltend unter anderen Komponenten silylterminierte Polyether, Polysiloxane mit Alkoxysilyl- oder Silanolgruppen und Katalysatoren. Diese Dispersionen finden Anwendung in Beschichtungen.

Es besteht daher der Bedarf nach einem geeigneten Bindemittelsystem zur Herstellung von Beschichtungen, die zur Verhinderung des Anhaftens von Mikroorganismen/Algen fähig sind, um den Biobewuchs durch diese zu verhindern bzw. zu verzögern.

Überraschenderweise wurde gefunden, dass mit einer härtbaren Zusammensetzung enthaltend als
- Komponente A mindestens ein Polysiloxan,
- Komponente B mindestens einen silylgruppentragenden Polyether und/oder Umsetzungsprodukte eines silylgruppentragenden Polyethers mit einer oder mehreren isocyanathaltigen Verbindungen gemäß der Formel (I) 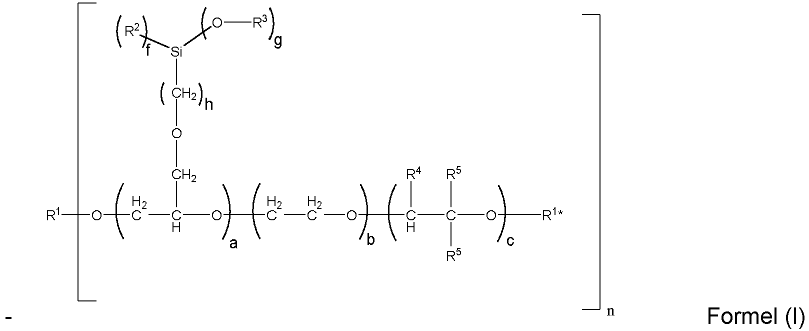 mit
   a = 1 bis 100, bevorzugt 1 bis 10, besonders bevorzugt 2 bis 5,
   b = 1 bis 500, bevorzugt 1 bis 400, besonders bevorzugt 1 bis 300,
   c = 0 bis 500, bevorzugt 1 bis 400, besonders bevorzugt 1 bis 300,
   f = 0 bis 2,
   g = 1 bis 3,
   mit der Maßgabe, dass g + f = 3
   h = 1 bis 10, bevorzugt 1 bis 6, besonders bevorzugt 1 bis 3,
   n = 1 bis 10, bevorzugt 1 bis 5, besonders bevorzugt 1 bis 3,
   mit der Maßgabe, dass die Fragmente mit den Indices a, b und c frei permutierbar über die Molekülkette verteilt sind und das die Summe von a, b und c > als 3 sind,
   und wobei
   R¹ = ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1-20 Kohlenstoffatome,
   R¹* = Wasserstoff, ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1-20 Kohlenstoffatome,
   R² = unabhängig voneinander eine Alkylgruppe mit 1 bis 8 Kohlenstoffatomen, bevorzugt 1 bis 5 Kohlenstoffatome,
   R³ = unabhängig voneinander eine Alkylgruppe mit 1 bis 8 Kohlenstoffatomen, bevorzugt 1 bis 5 Kohlenstoffatome,
   R⁴ = unabhängig voneinander ein Wasserstoffradikal, eine lineare, verzweigte oder cyclische Alkyl- oder Chloralkylgruppe mit 1 bis 20 Kohlenstoffatomen,
   R⁵ = unabhängig voneinander ein Wasserstoffradikal oder eine lineare, verzweigte oder cyclische Alkyl- oder Chloralkylgruppe mit 1 bis 20 Kohlenstoffatomen, eine Aryl- oder Alkarylgruppe,
   aufweist,
   und/oder um Umsetzungsprodukte eines silylgruppentragenden Polyethers gemäß der Formel (I) mit einer oder mehreren isocyanathaltigen Verbindungen, wobei R¹* bevorzugt ein Wasserstoff ist, handelt, mit der Maßgabe, dass Komponente B einen höheren Anteil an Wiederholungseinheiten (b) als Wiederholungseinheiten (a) und/oder (c) aufweist
      und
- Komponente C mindestens ein Katalysator
eine Beschichtung hergestellt werden kann, die eine derartige Eigenschaft aufweist.

Überraschend konnte festgestellt werden, dass mit der erfindungsgemäßen Zusammensetzung durch die Kombination von hydrophilen und hydrophoben Komponenten eine Beschichtung hergestellt werden konnte, die eine Oberfläche mit amphiphilen Eigenschaften aufweisen und somit einen Biobewuchs entgegen wirken kann.

Werden in der vorliegenden Erfindung chemische (Summen-)Formeln verwendet, so können die angegebenen Indizes sowohl absolute Zahlen als auch Mittelwerte darstellen.

Bei polymeren Verbindungen stellen die Indizes vorzugsweise Mittelwerte dar.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Vorzugsweise weist die erfindungsmäße Zusammensetzung silylgruppentragende Polyether mit verschiedenen Wiederholungseinheiten auf, die durch Umsetzung mit einem oder mehreren Alkylenoxiden, Glycidethern, Kohlendioxid, cyclischen Anhydriden, Isocyanaten, Caprolactonen oder cyclischen Carbonaten oder Mischungen davon hergestellt werden.

Die Wiederholungseinheiten können vorzugsweise eine statistische Verteilung und/oder blockartige Verteilung und/oder eine Verteilung entlang eines Gradienten aufweisen.

Vorzugsweise weist der silylgruppentragende Polyether eine oder mehrere endständige und/oder eine oder mehrere seitenständige Alkoxysilylreste auf.

Silylgruppentragende Polyether werden nach einem Verfahren gemäß der EP 2 093 244 B1, EP 2 289 972 B1 oder EP 2 289 961 A1 hergestellt.

Es ist dem Fachmann hinlänglich bekannt, nach welchem Verfahren er silylgruppentragende Polyether herstellen kann.

Indices a, b und c stellen die bevorzugten Wiederholungseinheiten dar. Weitere Wiederholungseinheiten d, e, f, etc., hervorgegangen z.B. aus Umsetzungen mit Kohlendioxid, cyclischen Anhydriden, Isocyanaten, Caprolactonen oder cyclischen Carbonaten oder deren Mischungen, sind ebenso vorstellbar.

Organische Alkoxysilanverbindungen wie 3-Glycidyloxy-propyltrimethoxy- bzw. - triethoxysilan, die z.B. unter den Handelsnamen DYNASYLAN^{®} GLYMO bzw. DYNASYLAN^{®} GLYEO (Warenzeichen der Evonik Degussa GmbH) erhältlich sind, nehmen Eingang in die Herstellung der bevorzugten Komponente B. Auch sind Isocyanatofunktionelle Alkoxysilanverbindungen verwendbar; so ist beispielsweise 3-Isocyanatopropyltrimethoxysilan unter dem Handelsnamen Geniosil^{®} GF 40 (Fa. Wacker Chemie) oder Silquest^{®} A-Link 35, Silquest* Y-5187 (Fa. Momentive) bzw. 3-Isocyanatopropyltriethoxysilan VESTANAT^{®} EP-IPMS (Fa. Evonik Industries AG), KBE-9007 (Fa. ShinEtsu) oder Silquest^{®} A-1310 / A-Link 25 (Fa. Momentive) erhältlich. Diese stellen die Wiederholungseinheiten (a) dar.

Zur Erzeugung der Wiederholungseinheiten (b) und/oder (c) können generell alle dem Fachmann bekannten Alkylenoxide verwendet werden. Vorzugsweise werden beispielsweise Ethylenoxid (EO), Propylenoxid (PO), 1,2-Epoxy-2-methylpropan (Isobutylenoxid), Epichlorhydrin, 2,3-Epoxy-1-propanol, 1,2-Epoxybutan (Butylenoxid, im Folgenden auch als BO abgekürzt), 2,3-Epoxybutan, 2,3-Dimethyl-2,3-epoxybutan, 1,2-Epoxypentan, 1,2-Epoxy-3-methylpentan, 1,2-Epoxyhexan, 1,2-Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid (im Folgenden auch als SO abgekürzt), 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxylisopropylether, (3,4-Epoxybutyl)stearat, 4,5-Epoxypentylacetat, 2,3-Epoxylpropanmethacrylat, 2,3-Epoxypropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-1,2-epoxypropan, 3-(Perfluoroethyl)-1,2-epoxypropan, 3-(Perfluorobutyl)-1,2-epoxypropan, 3-(Perfluorohexyl)-1,2-epoxypropan, 4-(2,3-Epoxypropyl)morpholin, 1-(Oxiran-2-ylmethyl)pyrrolidin-2-on eingesetzt.

Alle genannten Alkylenoxide können einzeln oder in beliebigen Mischungen eingesetzt werden.

Besonders bevorzugt werden Ethylenoxid und/oder Propylenoxid eingesetzt.

Bevorzugt weist der silylgruppentragende Polyether ein Verhältnis der Wiederholungseinheiten von b zu a von > 5 : 1, besonders bevorzugt > 8 : 1, ganz besonders bevorzugt > 10 : 1 und insbesondere ein Verhältnis von b zu a zwischen 11 : 1 bis 20 : 1 auf. Es wird angenommen, dass ein hoher Anteil an Wiederholungseinheiten (b) nach Hydratisierung die Bildung eines Hydrogels bewirkt und/oder begünstigt. Es wird vermutet, dass die Substratoberfläche (Schiffsrümpfe, Bojen, Fischnetze etc.) dadurch "maskiert" wird und die Mikroorganismen diese nicht als Oberfläche wahrnehmen.

Vorzugsweise wird das Verfahren zur Herstellung der silylgruppentragende Polyether derart geführt, dass der silylgruppentragende Polyether einen NCO-Wert von < als 0,1 Gew.-% beträgt.

Vorzugsweise handelt es sich bei den isocyanathaltigen Verbindungen um mono-, di- und/oder trifunktionelle Isocyanate, ausgewählt aus der Gruppe Methylisocyanat, Ethylisocyanat, Propylisocyanat, Butylisocyanat, weitere lineare oder verzweigte oder cyclische C4-C20 Alkylmonoisocyanate, besonders Laurylisocyanat, Stearylisocyanat, Toluol-2,4-diisocyanat (TDI), Diphenylmethandiisocyanat oder Methylendiphenyldiisocyanat (MDI), Hexamethylendiisocyanat (HMDI), 2,2,4-Trimethylhexan-1,6-diisocyanat (TMDI), Polymeres Diphenylmethandiisocyanat (PMDI), Isophorondiisocyanat (IPDI), 4,4'-Diisocyanatodicyclohexylmethan (H12MDI), Isophorondiisocyanat (IPDI), Triphenylmethantriisocyanat, 1,3,5-Benzoltriisocyanat und 2,4,6-Toluoltriisocyanat.

Die Urethanisierung des silylgruppentragenden Polyethers ist dem Fachmann gemäß US 9,035,011 (EP2 636 696) oder US 8,993,706, US 9,441,145 (EP2 289 972) bekannt.

Bevorzugt handelt es sich bei dem Polysiloxan um ein lineares, einfach oder mehrfach verzweigtes Si-OH- oder SiOR³- funktionelles Polysiloxan.

Hydroxyfunktionelle Siloxane sind u.a. von Evonik Industries unter dem Handelsnamen Polymer OH erhältlich, aber auch beispielsweise bei Dow Corning unter den Produktnamen DOW CORNING^{®} 3-3602, XIAMETER^{®} OHX-4081, DOW CORNING^{®} 5-0299, XIAMETER^{®} OHX-4000 POLYMER 2000CS, XIAMETER^{®} OHX-4081, XIAMETER^{®} PMX-0156 SILANOL FLUID.

Alkoxyfunktionelle Methyl- aber auch Methyl-/Phenyl- Siloxan-Oligomere sind im Hause Fa. ShinEtsu erhältlich, beispielsweise das KC-89S, KR-500, X 40-9225, X 40-9246, X 40-9250, KR-401N, X-40-9227, KR-510, KR-9218, KR-213. Auch sind Hybride erhältlich, die eine weitere Funktionalität beinhalten, beispielsweise eine Epoxyfunktionalität, wie X-41-1053, X-41-1059A, X-24-9590, KR-516.

Methoxyfunktionelle Methyl- und Methyl-/Phenyl-Siloxane sind erhältlich von Dow Corning unter den Handelsnamen Dow Corning^{®} US-CF 2403 Resin, US-CF 2405 Resin, 3037 Intermediate, 3074 Intermediate, RSN-5314 Intermediat. Silanolfunktionelle Methyl-/Phenylharze werden unter dem Handelsnamen RSN-0409 HS Resin, RSN-0431 HS Resin, RSN-0804 Resin, RSN-0805 Resin, RSN-0806 Resin, RSN-0808 Resin, RSN-0840 Resin vertrieben.

Epoxyfunktionelle Siloxane sind im Markt erhältlich u.a. von Evonik Industries unter dem Handelsnamen TEGOMER^{®} E-Si 2330 oder von ShinEtsu unter den Handelsnamen KF-105, X22-163 a, X22-163 b, X22-163 c, X22 - 169 As, X22-169 B oder Dow Corning Toray AY 42-119, BY 16-760, BY 16-839, BY 16-869, BY 16-870, BY 16-877. Epoxyverbindungen sind im Markt u.a. von Momentive/Hexion unter den Handelsnamen Epon, Eponex, Epalloy bzw. Ipox Chemicals unter den Handelsnamen ipox ER, ipox CL und ipox RD.

Alkoxyfunktionelle Methyl-/Phenyl- und Methyl- Silikonharze, die auch teil-hydrolysiert zum entsprechenden Silanol angeboten werden, finden sich unter dem Handelsnamen SILRES^{®} von Wacker Chemie im Handel, so z.B. das REN 50, REN 60, REN 80, KX, HK 46, MSE 100 oder SY 300, IC 836, REN 168, SY 409, IC 232, SY 231, IC 368, IC 678.

Die Herstellung von derartigen Silikonharzen ist der Literatur lange bekannt (siehe hierzu in W. Noll - Chemie und Technologie der Silicone, Wiley-VCH Verlag GmbH & Co. KGaA, Weinheim, 1960) und wird auch in der deutschen Patentschrift DE 34 12 648 beschrieben.

Bevorzugt handelt es sich bei dem Polysiloxan um ein Alkoxypolysiloxan.

Als weitere Bestandteile weist die Zusammensetzung vorzugsweise mindestens eine epoxyfunktionelle Verbindung und eine aminofunktionelle Verbindung auf.

Vorzugsweise handelt es sich bei der epoxyfunktionellen Verbindung um epoxyfunktionelle Silane bzw. Siloxane oder um aromatische oder aliphatische Glycidylether oder deren Kondensate oder Mischungen daraus.

Bevorzugte epoxyfunktionelle Verbindungen sind die von Epichlorhydrin abgeleiteten Glycidylether, Glycidylester und Glycidylamine, mehr bevorzugt Bisphenol A Diglycidylether, Bisphenol F Diglycidylether, Glycidylether von Novolaken (Epoxy-Novolak-Harze), hydrierter Bisphenol A Diglycidylether, hydrierter Bisphenol F Diglycidylether, Phenylglycidylether, Kresylglycidylether, tert-Butylglycidylether, Diglycidylanilin, Tetraglycidylmethylendianilin, Triglycidylaminophenol, 1,6-Hexandiglycidylether, 1,4-Butandiglycidylether, Cyclohexandimethyldiglycidylether, Alkylglycidylether, Benzylglycidylether, Trimethylolpropantriglycidylether, Pentaerythritoltetraglycidylether, bromierte Glycidylether wie Tetrabrombisphenol A Diglycidylether, Alkylglycidylester, Triglycidylisocyanurat, Allylglycidylether, Poly(alkylenglykol)diglycidylether sowie Epoxidverbindungen von ungesättigten Kohlenwasserstoffen und ungesättigten Fetten bzw. Fettsäuren. Ebenfalls bevorzugt sind oligomere und polymere Epoxidverbindungen ausgewählt aus Epoxidgruppen tragenden Polyolefinen und Siloxanen oder Epoxidverbindungen, die durch eine Kettenverlängerung bevorzugt aus Diglycidylethern mit OH-funktionellen Verbindungen entstanden sind. Besonders bevorzugt sind Epoxidverbindungen mit zwei oder mehr als zwei Epoxidgruppen pro Molekül.

Vorzugsweise handelt es sich bei der aminofunktionellen Verbindung um ein aminofunktionelles Alkoxysilan, bevorzugt ein aminofunktionelles Di- or Trialkoxysilan. Derartige aminofunktionelle Di- oder Trialkoxysilane sind im Markt verfügbar, beispielsweise unter den Handelsnamen Dynasylan^{®} (Fa. Evonik Industries AG), Silquest^{®} (Fa. Momentive), KBE903, KBM903, KBM603, KBE603, KBM602 (Fa. ShinEtsu), Geniosil^{®} (Fa. Wacker Chemie) oder Z-6011, AZ-720, Z-6610, Z-6015, Z-6020Z, Z-6094, Z-6021, 1-6436Z-6023, AY43-009 (Fa. Dow Corning).

Bevorzugt beträgt das stöchiometrische Verhältnis von Epoxyfunktion zu Aminofunktion im Bereich von 5 : 0,1 bis 0,1 : 5 liegt, bevorzugt von 1 : 1,5, besonders bevorzugt von 1 : 1.

Bevorzugt weist die erfindungsgemäße Zusammensetzung mindestens ein Vernetzer auf, gemäß der Formel (II)

R⁶_{d}Si(OR⁷)ₑ Formel (II)

mit der Maßgabe 0 ≤ d ≤ 2, 0 ≤ e ≤ 4 und d + e = 4,
R⁶ = unabhängig voneinander eine Alkylgruppe oder Cycloalkylgruppe mit 1 bis 8 Kohlenstoffatomen oder eine aromatische Gruppe mit 6 bis 20 Kohlenstoffatomen,
R⁷ = unabhängig voneinander eine Alkylgruppe mit 1 bis 8 Kohlenstoffatomen, bevorzugt eine Methyl-, Ethyl-, Propyl- oder Isopropylgruppe.

Alkylgruppen können beispielweise sein Methyl-, Ethyl-, Propyl-, Isopropyl-, n-Butyl-, sec-Butyl-, t-Butyl-gruppe. Eine aromatische Gruppierung kann beispielsweise eine Phenyl-Gruppierung sein. Bevorzugte Substituenten R sind Methyl- oder Phenyl- bzw. Mischungen aus Methyl- und Phenyl, bei denen das Ph : Me-Verhältnis im Bereich von 0 : 1 bis 1 : 0 liegen kann.

Bevorzugt werden Katalysatoren ausgewählt aus der Gruppe der den Hydrolyse-Kondensationsmechanismus fördernden Katalysatoren wie Organozinnkatalysatoren, Titanate oder Zirkonate, metallorganische Verbindungen des Aluminiums, Eisens, Calciums, Magnesiums, Zinks oder Bismuths, Lewis-Säuren oder organische Säuren/Basen, lineare oder zyklische Amidine, Guanidine oder Amine oder eine Mischung daraus eingesetzt.

Bevorzugte Katalysatoren sind die dem Fachmann bekannten Hydrolyse-/Kondensationskatalysatoren für Alkoxysilane. Vorzugseise werden als HärtungsKatalysatoren organische Zinnverbindungen, wie z.B. Dibutylzinndilaurat, Dibutylzinndiacetylacetonat, Dibutylzinndiacetat, Dibutylzinndioctoat, oder Dioctylzinndilaurat, Dioctylzinndiacetylacetonat, Dioctylzinndiketanoat, Dioctylstannoxan, Dioctylzinndicarboxylat, Dioctylzinnoxid, bevorzugt Dioctylzinndiacetylacetonat, Dioctylzinndilaurat, Dioctylzinndiketanoat, Dioctylstannoxan, Dioctylzinndicarboxylat, Dioctylzinnoxid, besonders bevorzugt Dioctylzinndiacetylacetonat und Dioctylzinndilaurat eingesetzt. Des Weiteren können auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropyl-ammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Weiter bevorzugt sind Bismutkatalysatoren, z.B. TIB Kat (TIB Mannheim) oder Borchi^{®}-Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtrisec-butylat und andere Alkoholate sowie Aluminiumacetylacetonat, Calciumverbindungen, wie Calciumdinatriumethylendiamin-tetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc.. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren bevorzugt. Weiter bevorzugt sind Guanidin-Gruppen tragende organische und Silicium-organische Verbindungen. Selbstverständlich können auch Kombinationen mehrerer Katalysatoren eingesetzt werden. Darüber hinaus können auch photolatente Basen als Katalysatoren verwendet werden, wie sie in der WO 2005/100482 beschrieben sind.

Der Härtungskatalysator wird in Mengen von 0,1 bis 5,0 Gew.-%, bevorzugt 0,2 bis 4,0 Gew.-% und besonders bevorzugt 0,5 bis 3 Gew.-% bezogen auf die Massensumme der Komponente (A), der Verbindung (b1) und den optionalen Alkoxysilanverbindungen eingesetzt.

Vorzugsweise enthält die erfindungsgemäße Zusammensetzung weitere Zusatzstoffe ausgewählt aus der Gruppe der Weichmacher, Füllstoffe, Lösungsmittel, Haftvermittler, Rheologieadditive, Stabilisatoren, Katalysatoren, Lösungsmittel und Trocknungsmittel, insbesondere chemische Feuchtigkeitstrocknungsmittel.

Es kann vorteilhaft sein, wenn die erfindungsgemäße härtbare Mischung ein Trocknungsmittel aufweist, z. B. zum Binden von durch Formulierungskomponenten eingetragenen, oder nachträglich durch den Abfüllprozess oder die Lagerung eingebrachten Wassers oder Feuchtigkeit. Als Trocknungsmittel können in den erfindungsgemäßen härtbaren Mischungen prinzipiell alle aus dem Stand der Technik bekannten Trocknungsmittel eingesetzt werden. Bevorzugt sind als chemisches Trocknungsmittel Vinyltrimethoxysilan (Dynasylan^{®} VTMO, Evonik oder Geniosil^{®} XL 10, Wacker), Vinyltriethoxysilan (Dynasylan^{®} VTEO, Evonik oder Geniosil^{®} GF 56, Wacker), N-Trimethoxysilylmethyl-O-methyl-carbamat (Geniosil^{®} XL 63, Wacker), N-Dimethoxy(methyl)silylmethyl-O-methyl-carbamat, N-Methyl[3-(Trimethoxysilyl)-propyl]carbamat (Geniosil^{®} GF 60, Wacker), Vinyldimethoxymethylsilan (Geniosil^{®} XL 12, Wacker), Vinyltris(2-methoxyethoxy)silan (Geniosil^{®} GF 58, Wacker) Bis(3-triethoxysilylpropyl)amin (Dynasylan^{®} 1122, Evonik), Bis(3-trimethoxysilylpropyl)amin (Dynasylan^{®} 1124), N-Dimethoxy(methyl)silylmethyl-O-methyl-carbamat (Geniosil^{®} XL 65, Wacker) oder oligomere Vinylsilane wie beispielsweise Dynasylan^{®} 6490 und Dynasylan^{®} 6498 (beide zu beziehen von Evonik) alleine oder deren Mischungen. Mehr bevorzugt sind die Trocknungsmittel ausgewählt aus Vinyltrimethoxysilan (Dynasylan^{®} VTMO, Evonik oder Geniosil^{®} XL 10, Wacker AG), Vinyltriethoxysilan (Dynasylan^{®} VTEO, Evonik oder Geniosil^{®} GF 56, Wacker). Ferner kann es vorteilhaft sein, wenn zusätzlich oder alternativ zur chemischen Trocknung ein physikalisches Trocknungsmittel, wie bevorzugt Zeolith, Molsieb, wasserfreies Natriumsulfat oder wasserfreies Magnesiumsulfat verwendet werden.

Der Anteil der Trocknungsmittel in den erfindungsgemäßen härtbaren Zusammensetzungen beträgt vorzugsweise von größer 0 bis 5 Gew.-%, bevorzugt von 0,2 bis 3 Gew.-% bezogen auf die Einsatzmenge der Alkoxysilylgruppen tragenden Polymere.

Auch kann die Verwendung von Lösungsmitteln sinnvoll sein. Die Lösungsmittel können dabei beispielsweise der Erniedrigung der Viskosität des unvernetzten Bindemittels dienen oder das Aufziehen auf die Oberfläche begünstigen. Als Lösungsmittel kommen prinzipiell sämtliche Lösungsmittel sowie Lösemittelmischungen in Betracht. Die Wahl eines geeigneten Lösungsmittels kann dabei erfolgen aus der Gruppe der Alkane, Alkene, Alkine, Benzol und Aromaten mit aliphatischen und aromatischen Substituenten, Carbonsäureester, lineare und cyclische Ether und bei hohen Drücken auch Kohlenstoffdioxid, halogenierte aliphatische oder aromatische Kohlenwasserstoffe, Ketone oder Aldehyde, Lactone (γ-Butyrolacton), Lactame (z.B. N-Methyl-2-pyrrolidon), Nitrile, Nitroverbindungen, tertiäre Carbonsäureamide (Dimethylformamid), Harnstoffderivate wie Tetramethylharnstoff oder Dimethylpropylenharnstoff (DMPU), Sulfoxide wie Dimethylsulfoxid (DMSO), Sulfone wie Sulfolan, Kohlensäureester wie Dimethylcarbonat oder Ethylencarbonat. Auch seien protische Lösungsmittel genannt wie Wasser, Methanol, Ethanol, n- und Isopropanol und andere Alkohole, primäre und sekundäre Amine, Carbonsäuren und deren Ester wie auch Anhydride, primäre und sekundäre Amide wie Formamid. Bevorzugt sind im Bereich der Coatinganwendungen akzeptierte Lösungsmittel wie Ether z.B. t-Butyl-methylether, Ester, wie z.B. Ethylacetat oder n-Butylacetat, tert-Butylacetat oder Diethylcarbonat sowie Alkohole, wie z.B. Ethanol und die verschiedenen Regioisomeren des Propanols und Butanols. Weiterhin sind bevorzugte Lösungsmittel aromatische und/oder aliphatische Lösemittel wie Benzol, Toluol oder Naphthaschnitte.

Bei Bedarf können die erfindungsgemäßen härtbaren Mischungen außerdem eine oder mehrere Substanzen, ausgewählt aus der Gruppe umfassend Co-Vernetzer, Flammschutzmittel, Entlüfter, Härtungsbeschleuniger für die Amin-Epoxid-Reaktion, antimikrobielle und konservierende Stoffe, Farbstoffe, Färbemittel und Pigmente, Frostschutzmittel, Fungizide und/oder Reaktivverdünner sowie Komplexbildner, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht, enthalten.

UV-Stabilisatoren sind bevorzugt bekannte Produkte auf Basis gehinderter phenolischer Systeme oder Benzotriazole. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin^{®}-Stabilisatoren (BASF), beispielsweise Tinuvin^{®} 1130, Tinuvin^{®} 292 oder auch Tinuvin^{®} 400, bevorzugt Tinuvin^{®} 1130 in Kombination mit Tinuvin^{®} 292 eingesetzt werden. Ihre Einsatzmenge richtet sich nach dem Grad der erforderlichen Stabilisierung.

Für die Farbgebung bei Beschichtungs-Systemen eigenen sich besonders anorganische Pigmente wie Metalloxide oder Spinellpigmente. Für die Verbesserung des Korrosionsschutzes kommen ferner die typischen Korrosionsschutzpigmente wie z.B. Zinkphosphat zum Einsatz.

Füllstoffe sind bevorzugt gefällte oder gemahlene Kreide, anorganische Carbonate im allgemeinen, gefällte oder gemahlene Silikate, gefällte oder pyrogene Kieselsäuren, Glaspulver, Glashohlkugeln (sog. Bubbles), Metalloxide, wie z.B. TiO₂, Al₂O₃, natürliche oder gefällte Bariumsulfate, Quarzmehle, Sand, Aluminiumtrihydrate, Talkum, Glimmer, Christobalitmehle, verstärkende Fasern, wie Glasfasern oder Kohlefasern, lang oder kurzfaserige Wollastonite, Kork, Ruß oder Graphit eingesetzt werden. Vorteilhaft können hydrophobierte Füllstoffe eingesetzt werden, da diese Produkte einen geringeren Wassereintrag aufweisen und die Lagerstabilität der Formulierungen verbessern.

Vorzugsweise enthält die erfindungsgemäße Zusammensetzung
1 Gew.-% bis 85 Gew.-%, bevorzugt 5 Gew.-% bis 75 Gew.-%, besonders bevorzugt 20 Gew.-% bis 60 Gew.-% Komponente A,
1 Gew.-% bis 50 Gew.-%, bevorzugt 10 Gew.-% bis 40 Gew.-%, besonders bevorzugt von 15 Gew.-% bis 35 Gew.-% Komponente B,
0,01 Gew.-% bis 5 Gew.-%, bevorzugt 0,05 Gew.-% bis 3 Gew.-%, besonders bevorzugt von 0,1 Gew.-% bis 2 Gew.-% Komponente C
bezogen auf 100 Gew.-% der Zusammensetzung.

Bevorzugt kann sie 0,1 Gew.-% bis 40 Gew.-%, bevorzugt 10,0 Gew.-% bis 35 Gew.-%, besonders bevorzugt von 20,0 Gew.-% bis 30,0 Gew.-% Komponente D bestehend aus mindestens einer epoxyfunktionellen Verbindung und einer aminofunktionellen Verbindung bezogen auf die Gesamtzusammensetzung enthalten.

Vorzugsweise setzt sich die Komponente D aus 30 Gew.-% bis 95 Gew.-%, bevorzugt 40 Gew.-% bis 90 Gew.-%, besonders bevorzugt aus 65 Gew.-% bis 85 Gew.-% der epoxyfunktionellen Verbindung und aus 0,1 Gew.-% bis 50 Gew.-%, bevorzugt 5 Gew.-% bis 40 Gew.-%, besonders bevorzugt aus 10 Gew.-% bis 30 Gew.-% der aminofunktionellen Verbindung bezogen auf die Gesamtzusammensetzung.

Vorzugsweise weist Komponente D mehr epoxyfunktionelle Verbindung als die aminofunktionelle Verbindung auf.

Vorzugsweise weist die erfindungsgemäße Zusammensetzung einen Wassergehalt von <1000 ppm, bevorzugt < 200 ppm, besonders bevorzugt < 50 ppm auf.

Durch die Zugabe von Trocknungsmitteln kann der Wassergehalt bis zu 0 ppm erreicht werden.

Vorteilhaft weist die erfindungsgemäße Zusammensetzung eine hinreichende Menge von Trocknungsmitteln auf, um die Lagerstabilität der Zusammensetzung zu erhöhen, insbesondere in 1K-Systemen.

Abhängig vom Aufbewahrungsort, Aufbewahrungsart und weiteren Zusatzstoffen kann der Fachmann die hinreichende Menge an Trocknungsmittel bestimmen.

Es ist auch vorstellbar, die erfindungsgemäße Zusammensetzung als 2K-Systeme bereitzustellen. Hierbei werden die Komponente A und Komponente B getrennt von Komponente C bereitgestellt. Die Bereitstellung der erfindungsgemäßen Zusammensetzung kann dem bereits bestehenden Herstellungsverfahren der jeweiligen Beschichtung adaptiert werden.

Eine andere Variante der 2K-Systeme ist die erfindungsgemäße Zusammensetzung in Anwesenheit einer Komponente D. Hierbei wird der Anteil an epoxyfunktioneller Verbindung zusammen mit Komponente A und Komponente B bereitgestellt, jedoch soll Komponente C getrennt davon und die aminfunktionelle Verbindung der Komponente D ggf. auch getrennt von den übrigen Komponente bereitgestellt sein.

Dem Fachmann ist bekannt, dass weitere Varianten der Zusammensetzung möglich sind. Sie ist jeweils den prozessualen Gegebenheiten bei der Herstellung und Verwendung anzupassen.

Ein weiterer Gegenstand der Erfindung sind Beschichtungen, Lacke und Farben enthaltend eine härtbare erfindungsgemäße Zusammensetzung.

Eine weitere Erfindung ist die Verwendung der härtbaren Zusammensetzung zur Herstellung von Beschichtungen, Lacken und Farben, bevorzugt zur Prävention oder Reduktion von Biofouling.

Das auf das Substrat aufgebrachte erfindungsgemäße Beschichtungssystem härtet unter Zutritt von Luftfeuchtigkeit durch eine katalysierte Hydrolyse-Kondensation-Vernetzung aus. Eine kombinierte forcierte Trocknung bei erhöhter Temperatur und gleichzeitig stattfindender chemischer Vernetzung durch Hydrolyse-Kondensation unter Einbringen von genügend Feuchtigkeit in den Ofen schließen sich dabei nicht gegenseitig aus und hängt maßgeblich von dem zu beschichtenden Substrat ab.

Die erfindungsgemäßen Gegenstände werden nachfolgend beispielhaft beschrieben, ohne dass die Erfindung auf diese beispielhaften Ausführungsformen beschränkt sein soll.

### Methoden:

### Trockenzeitmessungen

Zur Beurteilung der katalytischen Aktivität von Katalysatoren in einem Bindemittel eignet sich die Bestimmung der Trockenzeit mit einem Trockenzeitmessgerät (Drying Recorder). Ein solches Prüfverfahren beschreibt die ASTM D5895. Analog dieser Prüfmethode wurden Trockenzeitmessungen mittels eines Drying Recorders Typ BK3 (The Mickle Laboratory Engineering Co. Ltd., Goose Green, Gomshall, Guildford, Surrey GU5 9LJ., U.K.) durchgeführt. Dabei wurden auf Standardglasstreifen (30 x 2,5 cm x 2 mm) mittels einer Kastenrakel (Erichsen Model 360, Nassfilmschichtdicke 100 µm) Bindemittelfilme aufgetragen. Die Standardglasstreifen wurden zuvor mit Aceton und nachfolgend einer Ethanol/VE-Wasser-Mischung von Staub, Schmutz- und Fettanhaftungen befreit. Es wurde sodann der Schieber mittels eines Hebels auf der Rückseite, nach links in Startposition verschoben. Dann wurden die Ritznägel auf die Probenglasplatten runtergeklappt. Die Prüfdauer wurde auf 24 Stunden eingestellt und die Messung gestartet. Nach 24 Stunden wenn nötig die Nadel erneut am Startpunkt aufgelegt um einen 48 Stundenwert zu ermöglichen. Nach Ablauf der Prüfdauer wurden die Ritznägel hochgeklappt und die Glasplatten zur Beurteilung herausgenommen. Die An- und Durchtrocknungszeitpunkte wurden anhand der angebrachten Zeitskala abgelesen.

### Inerte Arbeitsweise

Unter "inerten" Bedingungen wird verstanden, dass der Gasraum innerhalb der Apparatur mit einem Inertgas, z.B. Stickstoff oder Argon gefüllt ist. Dies wird durch das Fluten der Apparatur erreicht, wobei ggf. ein nachfolgender leichter Inertgasstrom die fortlaufende Inertisierung gewährleistet.

### Applikation

Die Applikation der Bindemittelzusammensetzung findet im Allgemeinen durch Spritzapplikation statt, kann aber auch durch andere Applikationstechniken wie z. B. Streichen, Rollen, Fluten, Tauchen, Wischen, Gießen aufgetragen werden. Als Substrate eignen sich metallische Untergründe wie z. B. Stahl, Stahlguss, Edelstahl, Aluminium, Aluminiumguss oder feuerverzinkter Stahl. Für eine bessere Haftung kann das Substrat durch Sandstrahlen oder Anschleifen angeraut werden. Auch nichtmetallische Substrate wie Glas, Kunststoffe oder anorganische Substrate wie Keramiken, Steinzeug, Beton etc. können zum Einsatz kommen.

Die auf das Substrat aufgebrachte erfindungsgemäße Bindemittelzusammensetzung härtet dann unter Zutritt von Luftfeuchtigkeit durch eine katalysierte Hydrolyse-Kondensation-Vernetzung aus. Eine kombinierte forcierte Trocknung bei erhöhter Temperatur und gleichzeitig stattfindender chemische Vernetzung durch Hydrolyse-Kondensation unter Einbringen von genügend Feuchtigkeit in den Ofen schließen sich dabei nicht gegenseitig aus.

Ein weiterer Vorteil von Hydrolyse-Kondensations-Beschichtungssystemen, die mit einem Katalysator versetzt sind, ist, dass diese bei geschlossenen Gebinden keiner Topfzeitproblematik unterliegen, da die Aushärtung erst bei Anwesenheit von Wasser aus der umgebenden Luftfeuchtigkeit stattfindet. Im Gegensatz zu den konventionellen, rein physikalisch trocknenden z.B. silikonharzbasierten Beschichtungssystemen, die zum Erreichen der vollen mechanischen und chemischen Beständigkeit erst mindestens für 30 min bei 250 °C Objekttemperatur eingebrannt werden müssen, kann die Energie für die Ofentrocknung hier vollständig eingespart werden.

### Viskosität

Die Viskosität wurde Scherraten-abhängig bei 25 °C mit dem Rheometer MCR301 von Anton Parr in einer Platte-Platte-Anordnung mit einer Spaltbreite von 1 mm bestimmt. Der Durchmesser der oberen Platte betrug 40 mm. Die Viskosität bei einer Scherrate von 10 s⁻¹ wurde abgelesen und ist in den Tabellen 2 und 3 aufgeführt.

GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard (6000 g/mol).

### NCO-Gehalt

Der NCO-Gehalt in Prozent wurde über Rücktitration mit 0,1 molarer Salzsäure nach Reaktion mit Dibutylamin gemäß DIN EN ISO 11909 bestimmt.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Materialien und Geräte:

- Glasplatten, Hersteller: Gläserei Glänzer, Maße: 90 x 150 x 5mm
- PVC - Platten, Mat.Nr:4364002858, KVG Kunststoff Betriebs GmbH
- 300µm - Kastenrakel, Hersteller: Simex
- 300µm - Würfelrakel, Hersteller: TQC GmbH,
- Dispermat, VMA Getzmann mit Teflon-Scheibe
- Weithals - Glasflaschen

### Verwendete Chemikalien und Rohstoffe:

### Komponente A (Polysiloxan)

Es wurden vier Polysiloxane verwendet.

**Tabelle 1: Polysiloxane**

| | Typ und Firma | Phenyl-Methyl-Verhältnis (Ph:Me) | Methoxy-Wert (Gew.-%) | Molekulargewicht (Mw = kg/mol) |
|---|---|---|---|---|
| A1 | US-CF 2405, Fa. Dow Corning | 1:0 | 28 | ~4 |
| A2 | 3037 Intermediate, Fa. Dow Corning | 0,25:1 | 15-18 | ∼1 |
| A3 | 3074 Intermediate, Fa. Dow Corning | 1:1 | 15-18 | ~1.3 |
| | | | | |
| A4 | Polymer OH 20, Fa. Evonik | CAS-Nr. 70131-67-8 | | |

### Komponente B (Umsetzungsprodukte mit silylgruppentragendem Polyether)

Es wurden drei Komponente B1 bis B3 verwendet, wobei B1 und B2 keine Wiederholungseinheit (b) aufweisen.

B1 ist ein mit Trimethoxysilylgruppen terminiertes Polyurethan hergestellt nach einem Verfahren gemäß EP1 093 482 (US 6884852), welches eine Viskosität von 35.000 mPas aufweist.

### Herstellung von B2

In einem 5 Liter Autoklaven wurden 400 g Polypropylenglykol der mittleren Molmasse 2000 g/mol vorgelegt und mit 150 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130 °C erhitzt und auf ca. 20 mbar evakuiert, um leichtflüchtige Komponenten zu entfernen. Nach 30 min wurden zur Aktivierung des Katalysators 80 g Propylenoxid in den evakuierten Reaktor dosiert. Der Innendruck stieg zunächst auf ca. 0,8 bar an. Nach ca. 6 min sprang die Reaktion an, was sich durch einen Abfall im Reaktorinnendruck bemerkbar machte. Nun wurde innerhalb von ca. 180 Minuten bei 90-110 °C kontinuierlich eine Mischung aus 2352 g Propylenoxid und 166,8 g Dynasylan^{®} GLYEO (Firma Evonik) kontinuierlich zudosiert. Nach einstündiger Nachreaktion wurde bei <100 mbar desodoriert, um Reste an nicht umgesetztem Alkylenoxid zu entfernen. Anschließend wurden 500 ppm Irganox^{®} 1135 (Firma BASF) für 15 Minuten eingerührt. Es wurde ein farbloses, viskoses Präpolymer (16 500mPas bei 25 °C) mit durchschnittlich 3 mol Triethyoxysilylgruppen und 2 OH-Gruppen pro Molekül und einer Polydispersität M_{w}/Mₙ von 2,3 erhalten. Der Gewichtsanteil EO im Präpolymer betrug 0 %.

Bei 60 °C wurden 97,7 g Isophorondiisocyanat zugesetzt, fünf Minuten gerührt und 0,08 g TIB Kat 216 (Dioctylzinndilaurat) zugesetzt. Es wurde 45 min lang gerührt, auf 80 °C temperiert und 216 g eines Polyethers der allgemeinen Formel C₄H₉O[CH₂CH(CH₃)O]_{5,6}H zugesetzt. Anschließend wurde weitere 3 h lang gerührt.

Das fertige Produkt B2 hatte eine Viskosität von 67.000 mPas bei 25 °C und eine Polydispersität M_{w}/Mₙ von 5,2. Der NCO-Gehalt war <0,1 %.

### Herstellung von B3

In einem 5 Liter Autoklaven wurden 400 g Polypropylenglykol der mittleren Molmasse 2000 g/mol vorgelegt und mit 150 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130 °C erhitzt und auf ca. 20 mbar evakuiert, um leichtflüchtige Komponenten zu entfernen. Nach 30 min wurden zur Aktivierung des Katalysators 80 g Propylenoxid in den evakuierten Reaktor dosiert. Der Innendruck stieg zunächst auf ca. 0,8 bar an. Nach ca. 6 min sprang die Reaktion an, was sich durch einen Abfall im Reaktorinnendruck bemerkbar machte. Nun wurde innerhalb von ca. 180 Minuten bei 90-110 °C kontinuierlich eine Mischung aus 1847 g Propylenoxid, 449 g Ethylenoxid und 222,4 g Dynasylan^{®} GLYEO (Firma Evonik) kontinuierlich zudosiert. Nach einstündiger Nachreaktion wurde bei <100 mbar desodoriert, um Reste an nicht umgesetztem Alkylenoxid zu entfernen. Anschließend wurden 500 ppm Irganox^{®} 1135 (Firma BASF) für 15 Minuten eingerührt. Es wurde ein farbloses, viskoses Präpolymer (14 000 mPas bei 25 °C) mit durchschnittlich 4 mol Triethyoxysilylgruppen und 2 OH-Gruppen pro Molekül und einer Polydispersität M_{w}/Mₙ von 2,5 erhalten. Der Gewichtsanteil EO im Präpolymer betrug 15,0 %.

Bei 60 °C wurden 107 g Isophorondiisocyanat zugesetzt, fünf Minuten gerührt und 0,08 g TIB Kat 216 (Dioctylzinndilaurat) zugesetzt. Es wurde 45 min lang gerührt, auf 80 °C temperiert und 224 g eines Polyethers der allgemeinen Formel C₄H₉O[CH₂CH(CH₃)O]_{5,6}H zugesetzt. Anschließend wurde weitere 3 h lang gerührt.

Das fertige Produkt B3 hatte eine Viskosität von 56 000 mPas bei 25 °C und eine Polydispersität M_{w}/Mₙ von 5,0. Der NCO-Gehalt war <0,1 %.

### Komponente C (Katalysator.)

Als Katalysator wurde das Produkt TibKat 318 (DBTL) der Fa. TIB Mannheim mit CAS-Nr. 68299-15-0 eingesetzt.

### Komponente D

Epoxyfunktionelle und aminofunktionelle Verbindungen sind handelsübliche Produkte.

**Tabelle 2: Epoxyfunktionelle und aminofunktionelle Verbindung**

| | **Epoxyfunktionelle / aminofunktionelle Verbindung** | **Firma** | **Produktname** | **Eigenschaft** |
|---|---|---|---|---|
| D1 | a,w-epoxypropoxypropyl-funktionelles Polydimethylsiloxan | Gelest | DMS-E12, CAS-Nr. 102782-97-8 | Epoxy 1,7 Eq/kg (=588 g/eq) |
| D2 | Epoxidharz | Hexion | Eponex Resin 1510 | Epoxy 4,717 Eq/kg (=212 g/eq) |
| D3 | Aminopropyltrieethoxysilan | Evonik | Dynasylan AMEO, CAS-Nr. 919-30-2 | |

### Lösungsmittel

Xyol, Isomerengemisch (Fa. Aldrich, CAS-Nr. 1330-20-7)
Isopropanol (Fa. Aldrich, Artikel Nummer 59300-M)

### 1. Herstellung der Zusammensetzung und Applikation zur Bestimmung der Beschichtungsgüte, des Trocknungsverhaltens und der Antifouling-Eigenschaft

Die erfindungsgemäßen Zusammensetzungen Z1 - Z12 und die Vergleichszusammensetzungen VZ1 - VZ36 wurden gemäß den Angaben aus Tabellen 3 - 6, wie folgt, hergestellt:
In mit Stickstoff inertisierten Weithalsflaschen (250 ml) wurde die Komponente A vorgelegt und mit der Komponente B überschichtet. Es wurde sodann mittels eines Dispermaten mit aufgesetzter Teflonscheibe (VMA Getzmann) für 2 Minuten bei 2000 U/min homogenisiert. Sodann wurde zunächst die epoxyfunktionelle Komponente D1 oder D2 hinzugegeben und homogenisiert und ferner die berechnete Menge des aminofunktionellen Katalysators D3 zugegeben. Nach der wiederholten Homogenisierung für 2 Minuten bei 2000 U/min wurde der Katalysator C zugegeben und erneut homogenisiert. Bei härtbaren Zusammensetzungen ohne Komponente D erfolgte die Zugabe von Komponente C direkt folgend auf Komponente B, die Homogenisation erfolgte analog. Sämtliche Mischvorgänge am Dispermaten wurden derart durchgeführt, dass ein Gaseintrag in die Zusammensetzung so minimal wie möglich gehalten wurde. Eine Inertgasabdeckung sicherte das Gasvolumen über der Bindemittelphase.

Nach kurzer Ruhezeit von 5 Minuten wurden die erfindungsgemäßen Zusammensetzungen sowie Vergleichszusammensetzungen zur Beurteilung der Filmeigenschaften mittels 300 µm Kasten-Rakel (300µm - Kastenrakel, Fa. Simex) bei RT auf mit Isopropanol gereinigten Glasplatten (Fa. Gläserei Glänzer, Maße: 90 x 150 x 5mm) aufgezogen und bei RT getrocknet; zur Bestimmung der Trockenzeit wurden sie auf Standardglasstreifen (30 x 2,5 cm x 2 mm) mittels einer Kastenrakel (Fa. Erichsen Model 360, Nassfilmschichtdicke 100 µm) aufgetragen. Darüber hinaus wurden mittels Sprühapplikation PVC Panels (PVC - Platten, 200x400x5mm, Art. Nr:4364002858, KVG Kunststoff Betriebs GmbH) beschichtet, die zuvor mit einem handelsüblichen Primer zur besseren Adhäsion vorbehandelt wurden. Um die nötigen Spritzviskositäten zu erreichen wurden diese durch Verdünnung mit Xylol (Isomerengemisch) eingestellt. Die Trocknung erfolgte abschließend für 24 Stunden in dafür vorgesehenen Trockenschränken bei RT.

**Tabelle 3: Zusammensetzungen mit Komponente A1**

| | | VZ1 | VZ2 | VZ3 | Z1 | VZ4 | VZ5 | VZ6 | Z2 | VZ7 | VZ8 | VZ9 | Z3 |
|---|---|---|---|---|---|---|---|---|---|---|---|---|---|
| Komponente A | A1 | 70 | 70 | 70 | 70 | 70 | 70 | 70 | 70 | 70 | 70 | 70 | 70 |
| Komponente B | B1 | | 30 | | | | 30 | | | | 30 | | |
| | B2 | | | 30 | | | | 30 | | | | 30 | |
| | B3 | | | | 30 | | | | 30 | | | | 30 |
| Komponente C | Katalysator* | 2 | 2 | 2 | 2 | 2 | 2 | 2 | 2 | 2 | 2 | 2 | 2 |
| Komponente D | D1 | | | | | 30 | 30 | 30 | 30 | | | | |
| | D2 | | | | | | | | | 30 | 30 | 30 | 30 |
| | D3** | | | | | 1:1 | 1:1 | 1:1 | 1:1 | 1:1 | 1:1 | 1:1 | 1:1 |

Die Zahlenangaben sind als Gewichtsteile angegeben, wobei
*Komponente C in Gew.-% bezogen auf Gesamtzusammensetzung angegeben wird und
**die Menge von Komponente D3 mittels des Verhältnisses von D1 bzw. D2 entsprechend dem angegebenen Mol-Verhältnis errechnet wird.

**Tabelle 4: Zusammensetzungen mit Komponente A2**

| | | VZ10 | VZ1 1 | VZ12 | Z4 | VZ13 | VZ14 | VZ15 | Z5 | VZ16 | VZ17 | VZ18 | Z6 |
|---|---|---|---|---|---|---|---|---|---|---|---|---|---|
| Komponente A | A2 | 70 | 70 | 70 | 70 | 70 | 70 | 70 | 70 | 70 | 70 | 70 | 70 |
| Komponente B | B1 | | 30 | | | | 30 | | | | 30 | | |
| | B2 | | | 30 | | | | 30 | | | | 30 | |
| | B3 | | | | 30 | | | | 30 | | | | 30 |
| Komponente C | Katalysator* | 2 | 2 | 2 | 2 | 2 | 2 | 2 | 2 | 2 | 2 | 2 | 2 |
| Komponente D | D1 | | | | | 30 | 30 | 30 | 30 | | | | |
| | D2 | | | | | | | | | 30 | 30 | 30 | 30 |
| | D3** | | | | | 1:1 | 1:1 | 1:1 | 1:1 | 1:1 | 1:1 | 1:1 | 1:1 |

Die Zahlenangaben sind als Gewichtsteile angegeben, wobei
*Komponente C in Gew.-% bezogen auf Gesamtzusammensetzung angegeben wird und
**die Menge von Komponente D3 des Verhältnisses von D1 bzw. D2 entsprechend dem angegebenen Mol-Verhältnis errechnet wird.

**Tabelle 5: Zusammensetzungen mit Komponente A3**

| | | VZ19 | VZ20 | VZ21 | Z7 | VZ22 | VZ23 | VZ24 | Z8 | VZ25 | VZ26 | VZ27 | Z9 |
|---|---|---|---|---|---|---|---|---|---|---|---|---|---|
| Komponente A | A3 | 70 | 70 | 70 | 70 | 70 | 70 | 70 | 70 | 70 | 70 | 70 | 70 |
| Komponente B | B1 | | 30 | | | | 30 | | | | 30 | | |
| | B2 | | | 30 | | | | 30 | | | | 30 | |
| | B3 | | | | 30 | | | | 30 | | | | 30 |
| Komponente C | Katalysator* | 2 | 2 | 2 | 2 | 2 | 2 | 2 | 2 | 2 | 2 | 2 | 2 |
| Komponente D | D1 | | | | | 30 | 30 | 30 | 30 | | | | |
| | D2 | | | | | | | | | 30 | 30 | 30 | 30 |
| | D3** | | | | | 1:1 | 1:1 | 1:1 | 1:1 | 1:1 | 1:1 | 1:1 | 1:1 |

Die Zahlenangaben sind als Gewichtsteile angegeben, wobei
*Komponente C in Gew.-% bezogen auf Gesamtzusammensetzung angegeben wird und
**die Menge von Komponente D3 des Verhältnisses von D1 bzw. D2 entsprechend dem angegebenen Mol-Verhältnis errechnet wird.

**Tabelle 6: Zusammensetzungen mit Komponente A4**

| | | VZ28 | VZ29 | VZ30 | Z10 | VZ31 | VZ32 | VZ33 | Z11 | VZ34 | VZ35 | VZ36 | Z12 |
|---|---|---|---|---|---|---|---|---|---|---|---|---|---|
| Komponente A | A4 | 70 | 70 | 70 | 70 | 70 | 70 | 70 | 70 | 70 | 70 | 70 | 70 |
| Komponente B | B1 | | 30 | | | | 30 | | | | 30 | | |
| | B2 | | | 30 | | | | 30 | | | | 30 | |
| | B3 | | | | 30 | | | | 30 | | | | 30 |
| Komponente C | Katalysator* | 2 | 2 | 2 | 2 | 2 | 2 | 2 | 2 | 2 | 2 | 2 | 2 |
| Komponente D | D1 | | | | | 30 | 30 | 30 | 30 | | | | |
| | D2 | | | | | | | | | 30 | 30 | 30 | 30 |
| | D3** | | | | | 1:1 | 1:1 | 1:1 | 1:1 | 1:1 | 1:1 | 1:1 | 1:1 |

Die Zahlenangaben sind als Gewichtsteile angegeben, wobei
*Komponente C in Gew.-% bezogen auf Gesamtzusammensetzung angegeben wird und
**die Menge von Komponente D3 des Verhältnisses von D1 bzw. D2 entsprechend dem angegebenen Mol-Verhältnis errechnet wird

### 2. Beurteilung der aufgerakelten Zusammensetzungen

**Tabelle 7: Trockenzeit und Aussehen**

| | Trockenzeit [h] | Aussehen | | Trockenzeit [h] | Aussehen |
|---|---|---|---|---|---|
| VZ1 | <12 | 2 | VZ19 | < 24 | 2 |
| VZ2 | <24 | 2 | VZ20 | < 24 | 2 |
| VZ3 | <24 | 2 | VZ21 | < 24 | 2 |
| Z1 | <24 | 1 | Z7 | < 12 | 1 |
| VZ4 | < 24 | 2 | VZ22 | < 12 | 1 |
| VZ5 | < 24 | 2 | VZ23 | < 12 | 1 |
| VZ6 | < 24 | 2 | VZ24 | < 12 | 2 |
| Z2 | < 24 | 1 | Z8 | < 12 | 1 |
| VZ7 | < 24 | 2 | VZ25 | < 12 | 2 |
| VZ8 | < 24 | 2 | VZ26 | < 12 | 2 |
| VZ9 | < 24 | 2 | VZ27 | < 12 | 1 |
| Z3 | < 24 | 1 | Z9 | < 12 | 1 |
| VZ10 | < 24 | 2 | VZ28 | < 48 | 2 |
| VZ11 | < 24 | 3 | VZ29 | < 48 | 2 |
| VZ12 | < 24 | 3 | VZ30 | < 48 | 2 |
| Z4 | < 24 | 1 | Z10 | < 36 | 1 |
| VZ13 | < 24 | 2 | VZ31 | < 48 | 2 |
| VZ14 | < 24 | 2 | VZ32 | < 36 | 2 |
| VZ15 | < 24 | 2 | VZ33 | < 36 | 2 |
| Z5 | < 24 | 1 | Z11 | < 24 | 1 |
| VZ16 | < 24 | 2 | VZ34 | < 36 | 2 |
| VZ17 | < 24 | 2 | VZ35 | < 36 | 2 |
| VZ18 | < 24 | 2 | VZ36 | < 36 | 2 |
| Z6 | < 24 | 1 | Z12 | < 24 | 1 |

Visuelle Beurteilung der Beschichtung:
1 = sehr gut, gleichmäßiger Aufzug, defektfrei, klar;
2 = gut gleichmäßiger Aufzug, größtenteils defektfrei, klar oder trüb,
3 = nicht ok, ungleichmäßiger Aufzug, viele Defektstellen

### 3. Bestimmung der Antifoulingeigenschaft

Zur Prüfung der Zusammensetzungen hinsichtlich deren Wirksamkeit zur Verhinderung von Biofouling wurden die unter Punkt 1. hergestellten Zusammensetzungen auf PVC-Panels, analog wie oben beschrieben, appliziert, welche zu statischen Auslagerungsexperimenten in die Nordsee (Hooksiel bzw. Norderney) verbracht wurden.

Die Auslagerung der beschichteten PVC - Testpanels (erfindungsgemäße Beschichtungen B1 - B12, Vergleichsbeschichtungen VB1 - VB36) der Abmaße 20 x 40 cm erfolgte dabei im Zeitraum von März bis Oktober 2015 in einer Tiefe von 20 cm unter der Wasseroberfläche. Alle 2 Monaten wurden die Testpanels visuell untersucht und hinsichtlich des Bewuchses bewertet. Es wurde ferner mit einem handelsüblichen Gummiwischer (Fenstergummilippe) im unteren Bereich des Testpanels ein Streifen von 10 cm drucklos, je einmal von rechts nach links und sodann von links nach rechts, gewischt, um die Entfernbarkeit des Bewuchses zu erfassen.

Die Gesamtbewertung erfolgte mittels einer wie folgt dargestellten Skala von
0 = kein Bewuchs
1 = minimaler Bewuchs, sehr leicht zu entfernbar
2 = leichter Bewuchs, sehr leicht zu entfernen
3 = mittelstarker Bewuchs, deutliche Rückstände
4 = starker Bewuchs, starke Rückstände
5 = sehr starker Bewuchs, nicht zu entfernen

**Tabelle 8:**

| Beschichtung | 0 Monate | 2 Monate | 4 Monate | 6 Monate | 8 Monate |
|---|---|---|---|---|---|
| VB1 | 0 | 2 | 4 | 5 | 5 |
| VB2 | 0 | 2 | 4 | 5 | 5 |
| VB3 | 0 | 2 | 4 | 5 | 5 |
| B1 | 0 | 1 | 1 | 2 | 3 |
| VB4 | 0 | 1 | 3 | 4 | 5 |
| VB5 | 0 | 1 | 2 | 4 | 5 |
| VB6 | 0 | 1 | 2 | 3 | 5 |
| B2 | 0 | 0 | 1 | 1 | 3 |
| VB7 | 0 | 1 | 2 | 4 | 5 |
| VB8 | 0 | 1 | 3 | 4 | 5 |
| VB9 | 0 | 2 | 3 | 3 | 5 |
| B3 | 0 | 0 | 1 | 1 | 3 |
| VB10 | 0 | 1 | 3 | 5 | 5 |
| VB11 | 0 | 2 | 3 | 5 | 5 |
| VB12 | 0 | 1 | 3 | 5 | 5 |
| B4 | 0 | 1 | 1 | 2 | 3 |
| VB13 | 0 | 1 | 3 | 5 | 5 |
| VB14 | 0 | 1 | 2 | 4 | 5 |
| VB15 | 0 | 1 | 2 | 3 | 5 |
| B5 | 0 | 0 | 1 | 1 | 2 |
| VB16 | 0 | 1 | 2 | 4 | 5 |
| VB17 | 0 | 1 | 3 | 4 | 5 |
| VB18 | 0 | 2 | 3 | 3 | 5 |
| B6 | 0 | 0 | 1 | 2 | 2 |
| VB19 | 0 | 2 | 4 | 4 | 5 |
| VB20 | 0 | 2 | 5 | 5 | 5 |
| VB21 | 0 | 2 | 4 | 5 | 5 |
| B7 | 0 | 1 | 1 | 1 | 2 |
| VB22 | 0 | 1 | 3 | 4 | 5 |
| VB23 | 0 | 1 | 2 | 4 | 5 |
| VB24 | 0 | 1 | 2 | 3 | 5 |
| B8 | 0 | 0 | 0 | 0 | 1 |
| VB25 | 0 | 1 | 2 | 4 | 5 |
| VB26 | 0 | 1 | 3 | 4 | 5 |
| VB27 | 0 | 2 | 3 | 3 | 5 |
| B9 | 0 | 0 | 0 | 0 | 1 |
| VB28 | 0 | 2 | 2 | 3 | 4 |
| VB29 | 0 | 2 | 3 | 5 | 5 |
| VB30 | 0 | 2 | 4 | 5 | 5 |
| B10 | 0 | 1 | 1 | 1 | 2 |
| VB31 | 0 | 1 | 2 | 4 | 5 |
| VB32 | 0 | 1 | 2 | 4 | 5 |
| VB33 | 0 | 1 | 2 | 3 | 5 |
| B11 | 0 | 0 | 0 | 1 | 1 |
| VB34 | 0 | 1 | 2 | 4 | 4 |
| VB35 | 0 | 1 | 2 | 3 | 4 |
| VB36 | 0 | 2 | 3 | 3 | 4 |
| B12 | 0 | 0 | 0 | 1 | 1 |

Die Beschichtungen mit der erfindungsgemäßen Zusammensetzungen B1 - B12 zeigten einen minimalen bis leichten Bewuchs nach 8 Monaten auf, der sehr leicht zu entfernen war.

## Patentansprüche

1. Härtbare Zusammensetzung enthaltend als
- Komponente A mindestens ein Polysiloxan,
- Komponente B mindestens einen silylgruppentragenden Polyether und/oder um Umsetzungsprodukte eines silylgruppentragenden Polyethers mit einer oder mehreren isocyanathaltigen Verbindungen gemäß Formel (I): 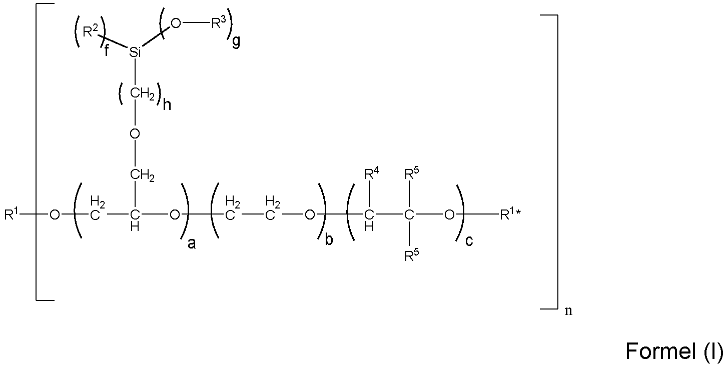 mit
a = 1 bis 100, bevorzugt 1 bis 10, besonders bevorzugt 2 bis 5,
b = 1 bis 500, bevorzugt 1 bis 400, besonders bevorzugt 1 bis 300,
c = 0 bis 500, bevorzugt 1 bis 400, besonders bevorzugt 1 bis 300,
f = 0 bis 2,
g = 1 bis 3,
mit der Maßgabe, dass g + f = 3
h = 1 bis 10, bevorzugt 1 bis 6, besonders bevorzugt 1 bis 3,
n = 1 bis 10, bevorzugt 1 bis 5, besonders bevorzugt 1 bis 3,
mit der Maßgabe, dass die Fragmente mit den Indices a, b und c frei permutierbar über die Molekülkette verteilt sind und das die Summe von a, b und c > als 3 sind,
und wobei
R¹ = ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1-20 Kohlenstoffatome,
R¹* = Wasserstoff, ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 1 bis 200 Kohlenstoffatome, besonders bevorzugt 1-20 Kohlenstoffatome, R² = unabhängig voneinander eine Alkylgruppe mit 1 bis 8 Kohlenstoffatomen, bevorzugt 1 bis 5 Kohlenstoffatome,
R³ = unabhängig voneinander eine Alkylgruppe mit 1 bis 8 Kohlenstoffatomen, bevorzugt 1 bis 5 Kohlenstoffatome,
R⁴ = unabhängig voneinander ein Wasserstoffradikal, eine lineare, verzweigte oder cyclische Alkyl- bzw. Chloralkylgruppe mit 1 bis 20 Kohlenstoffatomen,
R⁵ = unabhängig voneinander ein Wasserstoffradikal oder eine lineare, verzweigte oder cyclische Alkyl- bzw. Chloralkylgruppe mit 1 bis 20 Kohlenstoffatomen, eine Aryl- oder Alkarylgruppe,
aufweist,
und/oder um Umsetzungsprodukte eines silylgruppentragenden Polyethers gemäß der Formel (I) mit einer oder mehreren isocyanathaltigen Verbindungen, wobei R¹* bevorzugt ein Wasserstoff ist,
handelt, mit der Maßgabe, dass Komponente B einen höheren Anteil an Wiederholungseinheiten (b) als Wiederholungseinheiten (a) und/oder (c) aufweist
und
- Komponente C mindestens ein Katalysator.

2. Zusammensetzung nach Anspruch 1, **dadurch gekennzeichnet, dass** der silylgruppentragende Polyether verschiedene Wiederholungseinheiten aufweist, die durch Umsetzung mit einem oder mehreren Alkylenoxiden, Glycidether, Kohlendioxid, cyclischen Anhydriden, Isocyanaten, Caprolactonen oder cyclische Carbonaten oder Mischungen davon hergestellt werden.

3. Zusammensetzung nach einem der vorgenannten Ansprüche, **dadurch gekennzeichnet, dass** der silylgruppentragende Polyether eine oder mehrere endständige und/oder eine oder mehrere seitenständige Alkoxysilylreste aufweist.

4. Zusammensetzung nach einem der vorgenannten Ansprüche, **dadurch gekennzeichnet, dass** der silylgruppentragende Polyether ein Verhältnis der Wiederholungseinheiten von b zu a von > 5 : 1, besonders bevorzugt > 8 : 1, ganz besonders bevorzugt > 10 : 1 und insbesondere ein Verhältnis von b zu a zwischen 11 : 1 bis 20 : 1 aufweist.

5. Zusammensetzung nach Anspruch 1, **dadurch gekennzeichnet, dass** das Polysiloxan ein lineares, einfach oder mehrfach verzweigtes Si-OH- oder SiOR³- funktionelles Polysiloxan ist.

6. Zusammensetzung nach Anspruch 1, **dadurch gekennzeichnet, dass** das Polysiloxan ein Alkoxypolysiloxan ist.

7. Zusammensetzung nach Anspruch 1, **dadurch gekennzeichnet, dass** das Polysiloxan mindestens eine Epoxyfunktionalität und/oder eine Alkoxyfunktionalität aufweist.

8. Zusammensetzung nach Anspruch 1, **dadurch gekennzeichnet, dass** sie als weitere Bestandteile mindestens eine epoxyfunktionelle Verbindung und eine aminofunktionelle Verbindung aufweist.

9. Zusammensetzung nach Anspruch 8, **dadurch gekennzeichnet, dass** das stöchiometrische Verhältnis von Epoxyfunktion zu Aminofunktion im Bereich von 5 : 0,1 bis 0,1 : 5 liegt, bevorzugt von 1 : 1,5, besonders bevorzugt von 1 : 1 ist.

10. Zusammensetzung nach Anspruch 8, **dadurch gekennzeichnet, dass** es sich bei der epoxyfunktionellen Verbindung um epoxyfunktionelle Silane oder epoxyfunktionelle Siloxane oder um aromatische oder aliphatische Glycidylether oder deren Kondensate oder Mischungen daraus handelt.

11. Zusammensetzung nach Anspruch 8, **dadurch gekennzeichnet, dass** es sich bei der aminofunktionellen Verbindung um ein aminofunktionelles Alkoxysilan, bevorzugt ein aminofunktionelles Di- oder Trialkoxysilan handelt.

12. Zusammensetzung nach Anspruch 1, **dadurch gekennzeichnet, dass** sie mindestens ein Vernetzer aufweist, gemäß der Formel (II)
R⁶_{d}Si(OR⁷)ₑ Formel (II)
mit der Maßgabe 0 ≤ d ≤ 2, 0 ≤ e ≤ 4 und d + e = 4,
R⁶ = unabhängig voneinander eine Alkylgruppe oder Cycloalkylgruppe mit 1 bis 8 Kohlenstoffatomen oder eine aromatische Gruppe mit 6 bis 20 Kohlenstoffatomen,
R⁷ = unabhängig voneinander eine Alkylgruppe mit 1 bis 8 Kohlenstoffatomen, bevorzugt eine Methyl-, Ethyl-, Propyl- oder Isopropylgruppe.

13. Zusammensetzung nach Anspruch 1, **dadurch gekennzeichnet, dass** der Katalysator ausgewählt ist aus der Gruppe der den Hydrolyse-Kondensationsmechanismus fördernden Katalysatoren wie Organozinnkatalysatoren, Titanate oder Zirkonate, metallorganische Verbindungen des Aluminiums, Eisens, Calciums, Magnesiums, Zinks oder Bismuths, Lewis-Säuren oder organische Säuren/Basen, lineare oder verzweigte oder zyklische Amidine, Guanidine oder Amine oder eine Mischung daraus.

14. Zusammensetzung nach einem der vorgenannten Ansprüche, **dadurch gekennzeichnet, dass** weitere Zusatzstoffe ausgewählt aus der Gruppe der Weichmacher, Füllstoffe, Haftvermittler, Rheologieadditive, Stabilisatoren, Katalysatoren, Lösungsmittel und Trocknungsmittel, insbesondere chemische Feuchtigkeitstrocknungsmittel, enthalten sind.

15. Zusammensetzung nach einem der vorgenannten Ansprüche, enthaltend
- 1 Gew.-% bis 85 Gew.-%, bevorzugt 5 Gew.-% bis 75 Gew.-%, besonders bevorzugt 20 Gew.-% bis 60 Gew.-% Komponente A,
- 1 Gew.-% bis 50 Gew.-%, bevorzugt 10 Gew.-% bis 40 Gew.-%, besonders bevorzugt von 15 Gew.-% bis 35 Gew.-% Komponente B,
- 0,01 Gew.-% bis 5 Gew.-%, bevorzugt 0,05 Gew.-% bis 3 Gew.-%, besonders bevorzugt von 0,1 Gew.-% bis 2 Gew.-% Komponente C,
bezogen auf 100 Gew.-% der Zusammensetzung.

16. Zusammensetzung nach Anspruch 15, **dadurch gekennzeichnet, dass** sie 0,1 Gew.-% bis 40 Gew.-%, bevorzugt 10,0 Gew.-% bis 35 Gew.-%, besonders bevorzugt von 20,0 Gew.-% bis 30,0 Gew.-% Komponente D bestehend aus mindestens einer epoxyfunktionellen Verbindung und einer aminofunktionellen Verbindung bezogen auf die Gesamtzusammensetzung enthält.

17. Zusammensetzung nach Anspruch 16, **dadurch gekennzeichnet, dass** die Komponente D sich zusammensetzt aus 30 Gew.-% bis 95 Gew.-%, bevorzugt 40 Gew.-% bis 90 Gew.-%, besonders bevorzugt aus 65 Gew.-% bis 85 Gew.-% der epoxyfunktionellen Verbindung und aus 0,1 Gew.-% bis 50 Gew.-%, bevorzugt 5 Gew.-% bis 40 Gew.-%, besonders bevorzugt aus 10 Gew.-% bis 30 Gew.-% der aminofunktionellen Verbindung bezogen auf die Gesamtzusammensetzung.

18. Beschichtungen, Lacke und Farben enthaltend einer härtbaren Zusammensetzung nach einem der vorgenannten Ansprüche.

19. Verwendung der härtbaren Zusammensetzung gemäß Anspruch 1 zur Herstellung von Beschichtungen, Lacken und Farben, bevorzugt zur Prävention oder Reduktion von Biofouling.

## Claims

1. Curable composition comprising, as
- component A, at least one polysiloxane,
- component B, at least one polyether bearing silyl groups and/or reaction products of a polyether bearing silyl groups with one or more isocyanate-containing compounds of formula (I): 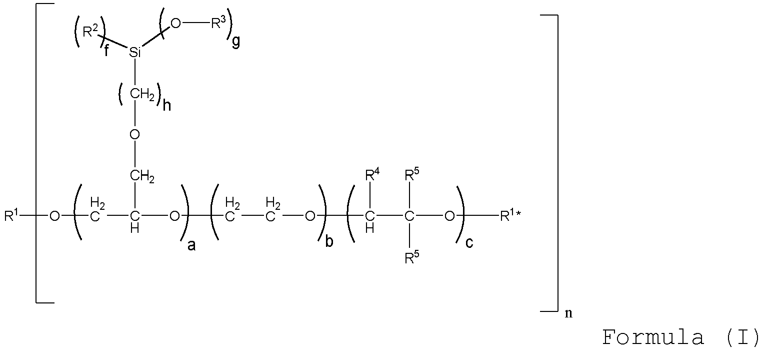 with
a = 1 to 100, preferably 1 to 10, more preferably 2 to 5,
b = 1 to 500, preferably 1 to 400, more preferably 1 to 300,
c = 0 to 500, preferably 1 to 400, more preferably 1 to 300,
f = 0 to 2,
g = 1 to 3,
with the proviso that g + f = 3,
h = 1 to 10, preferably 1 to 6, more preferably 1 to 3,
n = 1 to 10, preferably 1 to 5, more preferably 1 to 3,
with the proviso that the fragments having the indices a, b and c are distributed over the molecule chain in a freely permutable manner and that the sum total of a, b and c is > 3,
and where
R¹ = a saturated or unsaturated, linear or branched organic hydrocarbon radical which may contain O, S and/or N as heteroatoms, the hydrocarbon radical preferably containing 1 to 400 carbon atoms, preferably 1 to 200 carbon atoms, more preferably 1-20 carbon atoms,
R¹* = hydrogen, a saturated or unsaturated, linear or branched organic hydrocarbon radical which may contain O, S and/or N as heteroatoms, the hydrocarbon radical preferably containing 1 to 400 carbon atoms, preferably 1 to 200 carbon atoms, more preferably 1-20 carbon atoms, R² = independently at each instance an alkyl group having 1 to 8 carbon atoms, preferably 1 to 5 carbon atoms,
R³ = independently at each instance an alkyl group having 1 to 8 carbon atoms, preferably 1 to 5 carbon atoms,
R⁴ = independently at each instance a hydrogen radical, a linear, branched or cyclic alkyl or chloroalkyl group having 1 to 20 carbon atoms,
R⁵ = independently at each instance a hydrogen radical or a linear, branched or cyclic alkyl or chloroalkyl group having 1 to 20 carbon atoms, an aryl or alkaryl group,
and/or reaction products of a polyether bearing silyl groups of the formula (I) with one or more isocyanate-containing compounds, where R¹* is preferably a hydrogen, with the proviso that component B has a higher proportion of repeat units (b) than repeat units (a) and/or (c) and
- component C, at least one catalyst.

2. Composition according to Claim 1, **characterized in that** the polyether bearing silyl groups has various repeat units that are prepared by reaction with one or more alkylene oxides, glycidyl ethers, carbon dioxide, cyclic anhydrides, isocyanates, caprolactones or cyclic carbonates or mixtures thereof.

3. Composition according to either of the preceding claims, **characterized in that** the polyether bearing silyl groups has one or more terminal and/or one or more pendant alkoxysilyl radicals.

4. Composition according to any of the preceding claims, **characterized in that** the polyether bearing silyl groups has a ratio of repeat units of b to a of > 5:1, more preferably > 8:1, even more preferably > 10:1, and especially a ratio of b to a between 11:1 and 20:1.

5. Composition according to Claim 1, **characterized in that** the polysiloxane is a linear or singly or multiply branched Si-OH- or SiOR³-functional polysiloxane.

6. Composition according to Claim 1, **characterized in that** the polysiloxane is an alkoxypolysiloxane.

7. Composition according to Claim 1, **characterized in that** the polysiloxane has at least one epoxy functionality and/or one alkoxy functionality.

8. Composition according to Claim 1, **characterized in that** it includes, as further constituents, at least one epoxy-functional compound and one amino-functional compound.

9. Composition according to Claim 8, **characterized in that** the stoichiometric ratio of epoxy function to amino function is in the range from 5:0.1 to 0.1:5, preferably 1:1.5, more preferably 1:1.

10. Composition according to Claim 8, **characterized in that** the epoxy-functional compound comprises epoxy-functional silanes or epoxy-functional siloxanes or aromatic or aliphatic glycidyl ethers or condensates thereof or mixtures thereof.

11. Composition according to Claim 8, **characterized in that** the amino-functional compound is an amino-functional alkoxysilane, preferably an amino-functional di- or trialkoxysilane.

12. Composition according to Claim 1, **characterized in that** it includes at least one crosslinker of the formula (II)
R⁶_{d}Si(OR⁷)ₑ Formula (II)
with the proviso that 0 ≤ d ≤ 2, 0 ≤ e ≤ 4 and d + e = 4,
R⁶ = independently at each instance an alkyl group or cycloalkyl group having 1 to 8 carbon atoms or an aromatic group having 6 to 20 carbon atoms,
R⁷ = independently at each instance an alkyl group having 1 to 8 carbon atoms, preferably a methyl, ethyl, propyl or isopropyl group.

13. Composition according to Claim 1, **characterized in that** the catalyst is selected from the group of the catalysts that promote the hydrolysis condensation mechanism, such as organotin catalysts, titanates or zirconates, organometallic compounds of aluminium, of iron, of calcium, of magnesium, of zinc or bismuth, Lewis acids or organic acids/bases, linear or branched or cyclic amidines, guanidines or amines, or a mixture thereof.

14. Composition according to any of the preceding claims, **characterized in that** further additives selected from the group of the plasticizers, fillers, adhesion promoters, rheology additives, stabilizers, catalysts, solvents and drying agents, especially chemical moisture drying agents, are present.

15. Composition according to any of the preceding claims, comprising
- 1% by weight to 85% by weight, preferably 5% by weight to 75% by weight, more preferably 20% by weight to 60% by weight, of component A,
- 1% by weight to 50% by weight, preferably 10% by weight to 40% by weight, more preferably from 15% by weight to 35% by weight, of component B,
- 0.01% by weight to 5% by weight, preferably 0.05% by weight to 3% by weight, more preferably from 0.1% by weight to 2% by weight, of component C,
based on 100% by weight of the composition.

16. Composition according to Claim 15, **characterized in that** it contains 0.1% by weight to 40% by weight, preferably 10.0% by weight to 35% by weight, more preferably from 20.0% by weight to 30.0% by weight, of component D consisting of at least one epoxy-functional compound and one amino-functional compound based on the overall composition.

17. Composition according to Claim 16, **characterized in that** component D is composed of 30% by weight to 95% by weight, preferably 40% by weight to 90% by weight, more preferably of 65% by weight to 85% by weight, of the epoxy-functional compound and of 0.1% by weight to 50% by weight, preferably 5% by weight to 40% by weight, more preferably of 10% by weight to 30% by weight, of the amino-functional compound based on the overall composition.

18. Coatings, paints and dyes comprising a curable composition according to any of the preceding claims.

19. Use of the curable composition according to Claim 1 for production of coatings, paints and dyes, preferably for prevention or reduction of biofouling.

## Revendications

1. Composition durcissable contenant comme
- composant A au moins un polysiloxane,
- composant B au moins un polyéther portant des groupes silyle et/ou des produits de réaction d'un polyéther portant des groupes silyle avec un ou plusieurs composés contenant des isocyanates selon la formule (I) : 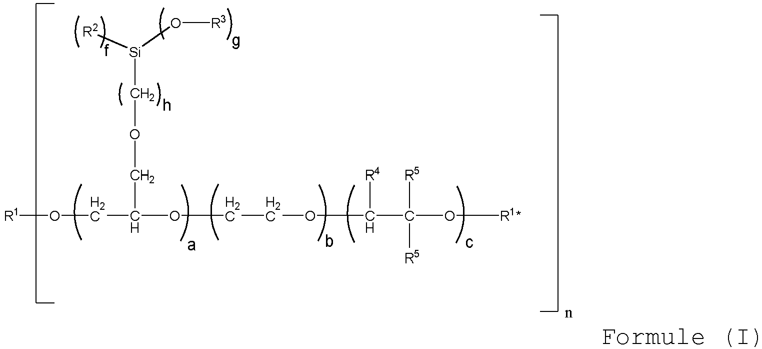 dans laquelle
a = 1 à 100, de préférence 1 à 10, de façon particulièrement préférée 2 à 5,
b = 1 à 500, de préférence 1 à 400, de façon particulièrement préférée 1 à 300,
c = 0 à 500, de préférence 1 à 400, de façon particulièrement préférée 1 à 300,
f = 0 à 2,
g = 1 à 3,
à condition que g + f = 3
h = 1 à 10, de préférence 1 à 6, de façon particulièrement préférée 1 à 3,
n = 1 à 10, de préférence 1 à 5, de façon particulièrement préférée 1 à 3,
à condition que les fragments avec les indices a, b et c soient répartis de manière librement permutable sur la chaîne moléculaire et que la somme de a, b et c soit > à 3,
et dans laquelle
R¹ = un radical hydrocarboné organique, saturé ou insaturé, linéaire ou ramifié, qui peut contenir comme hétéroatomes O, S et/ou N, de préférence le radical hydrocarboné contient de 1 à 400 atomes de carbone, de préférence de 1 à 200 atomes de carbone, de façon particulièrement préférée de 1 à 20 atomes de carbone,
R¹* = l'hydrogène, un radical hydrocarboné organique, saturé ou insaturé, linéaire ou ramifié, qui peut contenir comme hétéroatomes O, S et/ou N, de préférence le radical hydrocarboné contient de 1 à 400 atomes de carbone, de préférence de 1 à 200 atomes de carbone, de façon particulièrement préférée de 1 à 20 atomes de carbone,
R² = indépendamment les uns des autres un groupe alkyle de de 1 à 8 atomes de carbone, de préférence de 1 à 5 atomes de carbone,
R³ = indépendamment les uns des autres un groupe alkyle de de 1 à 8 atomes de carbone, de préférence de 1 à 5 atomes de carbone,
R⁴ = indépendamment les uns des autres un radical hydrogène, un groupe alkyle ou chloroalkyle linéaire, ramifié ou cyclique de 1 à 20 atomes de carbone,
R⁵ = indépendamment les uns des autres un radical hydrogène ou un groupe alkyle ou chloroalkyle linéaire, ramifié ou cyclique de 1 à 20 atomes de carbone, un groupe aryle ou alkaryle,
aufweist,
et/ou des produits de réaction d'un polyéther portant des groupes silyle selon la formule (I) avec un ou plusieurs composés contenant des isocyanates, R¹* étant de préférence un hydrogène,
à condition que le composant B présente une proportion d'unités de répétition (b) supérieure à celle des unités répétition (a) et/ou (c)
et
- composant C au moins un catalyseur.

2. Composition selon la revendication 1, **caractérisée en ce que** le polyéther portant des groupes silyle présente différentes unités de répétition fabriquées par réaction avec un ou plusieurs oxydes d'alkylène, éthers de glycidyle, dioxyde de carbone, anhydrides cycliques, isocyanates, caprolactones ou carbonates cycliques ou leurs mélanges.

3. Composition selon l'une quelconque des revendications précédentes, **caractérisée en ce que** le polyéther portant des groupes silyle présente un ou plusieurs radicaux alcoxysilyle terminaux et/ou un ou plusieurs radicaux alcoxysilyle latéraux.

4. Composition selon l'une quelconque des revendications précédentes, **caractérisée en ce que** le polyéther portant des groupes silyle présente un rapport des unités de répétition de b à a > 5: 1, de façon particulièrement préférée > 8: 1, de façon tout particulièrement préférée > 10: 1 et notamment un rapport de b à a entre 11: 1 à 20: 1.

5. Composition selon la revendication 1, **caractérisée en ce que** le polysiloxane est un polysiloxane à fonction Si-OH ou SiOR³ linéaire, ramifié une fois ou plusieurs fois.

6. Composition selon la revendication 1, **caractérisée en ce que** le polysiloxane est un alcoxypolysiloxane.

7. Composition selon la revendication 1, **caractérisée en ce que** le polysiloxane présente au moins une fonctionnalité époxy et/ou une fonctionnalité alcoxy.

8. Composition selon la revendication 1, **caractérisée en ce qu'**elle présente, comme autres constituants, au moins un composé à fonction époxy et un composé à fonction amino.

9. Composition selon la revendication 8, **caractérisée en ce que** le rapport stœchiométrique de la fonction époxy à la fonction amino est dans la plage de 5: 0,1 à 0,1: 5, de préférence de 1: 1,5, de façon particulièrement préférée de 1: 1.

10. Composition selon la revendication 8, **caractérisée en ce que** le composé à fonction époxy est un silane à fonction époxy ou un siloxane à fonction époxy ou un éther glycidylique aromatique ou aliphatique ou leurs condensats ou leurs mélanges.

11. Composition selon la revendication 8, **caractérisée en ce que** le composé à fonction amino est un alcoxysilane à fonction amino, de préférence un di- ou trialcoxysilane à fonction amino.

12. Composition selon la revendication 1, **caractérisée en ce qu'**elle présente au moins un agent de réticulation, selon la formule (II)
R⁶_{d}Si(OR⁷)ₑ Formule (II)
à condition que 0 ≤ d ≤ 2, 0 ≤ e ≤ 4 et d + e = 4,
R⁶ = indépendamment les uns des autres un groupe alkyle ou un groupe cycloalkyle de 1 à 8 atomes de carbone ou un groupe aromatique de 6 à 20 atomes de carbone,
R⁷ = indépendamment les uns des autres un groupe alkyle de 1 à 8 atomes de carbone, de préférence un groupe méthyle, éthyle, propyle ou isopropyle.

13. Composition selon la revendication 1, **caractérisée en ce que** le catalyseur est choisi dans le groupe des catalyseurs favorisant le mécanisme d'hydrolyse-condensation tels que les catalyseurs organostanniques, les titanates ou les zirconates, les composés organométalliques d'aluminium, de fer, de calcium, de magnésium, de zinc ou de bismuth, les acides de Lewis ou les acides/bases organiques, les amidines, guanidines ou amines linéaires ou ramifiées ou cycliques, ou un mélange de ceux-ci.

14. Composition selon l'une quelconque des revendications précédentes, **caractérisée en ce qu'**elle contient d'autres additifs choisis dans le groupe des plastifiants, des charges, des promoteurs d'adhérence, des additifs rhéologiques, des stabilisants, des catalyseurs, des solvants et des agents de séchage, notamment des agents de séchage chimique à l'humidité.

15. Composition selon l'une quelconque des revendications précédentes, contenant
- 1 % en poids à 85 % en poids, de préférence 5 % en poids à 75 % en poids, de façon particulièrement préférée 20 % en poids à 60 % en poids de composant A,
- 1 % en poids à 50 % en poids, de préférence 10 % en poids à 40 % en poids, de façon particulièrement préférée de 15 % en poids à 35 % en poids de composant B,
- 0,01 % en poids à 5 % en poids, de préférence 0,05 % en poids à 3 % en poids, de façon particulièrement préférée de 0,1 % en poids à 2 % en poids de composant C,
par rapport à 100 % en poids de la composition.

16. Composition selon la revendication 15, **caractérisée en ce qu'**elle contient de 0,1 % en poids à 40 % en poids, de préférence de 10,0 % en poids à 35 % en poids, de façon particulièrement préférée de 20,0 % en poids à 30,0 % en poids de composant D constitué d'au moins un composé à fonction époxy et d'un composé à fonction amino par rapport à la composition totale.

17. Composition selon la revendication 16, **caractérisée en ce que** le composant D se compose de 30 % en poids à 95 % en poids, de préférence de 40 % en poids à 90 % en poids, de façon particulièrement préférée de 65 % en poids à 85 % en poids du composé à fonction époxy et de 0,1 % en poids à 50 % en poids, de préférence de 5 % en poids à 40 % en poids, de façon particulièrement préférée de 10 % en poids à 30 % en poids du composé à fonction amino par rapport à la composition totale.

18. Revêtements, vernis et peintures contenant une composition durcissable selon l'une quelconque des revendications précédentes.

19. Utilisation de la composition durcissable selon la revendication 1 pour la préparation de revêtements, de vernis et de peintures, de préférence pour la prévention ou la réduction de l'encrassement biologique.
